# DEMANDE DE BREVET EUROPEEN

(11) **EP 4 576 532 A1**
(43) Date de publication de la demande: **25.06.2025**
(21) Numéro de dépôt: 24221398.1
(22) Date de dépôt: 19.12.2024
(51) Int. Cl.: H02M 1/00, H02M 3/00, H02M 1/32

(54) **DISPOSITIF ÉLECTRONIQUE ET PROCÉDÉ DE PILOTAGE, AVEC SUPPRESSION D'AU MOINS UNE PHASE ÉNERGISANTE, D'UN CONVERTISSEUR D'ÉNERGIE ÉLECTRIQUE COMPORTANT UN RÉSONATEUR PIÉZOÉLECTRIQUE, SYSTÈME DE CONVERSION D'ÉNERGIE ÉLECTRIQUE ASSOCIÉ**

(30) Priorité: 19.12.2023 FR 2314512
(71) Demandeur: Commissariat à l'Energie Atomique et aux Energies Alternatives, 75015 Paris (FR)
(72) Inventeur: DE ARAUJO PEREIRA, Lucas Henrique, 38054 GRENOBLE CEDEX 9 (FR); DESPESSE, Ghislain, 38054 GRENOBLE CEDEX 9 (FR); MOREL, Adrien, 38054 GRENOBLE CEDEX 9 (FR); PILLONNET, Gaël, 38054 GRENOBLE CEDEX 9 (FR)
(74) Mandataire: Lavoix

(57) **Abrégé**

L'invention concerne un dispositif (20) de pilotage d'un convertisseur (10) comportant deux bornes d'entrée, deux bornes de sortie, un résonateur piézoélectrique (15), et plusieurs interrupteurs (K1, K2, K3) connectés au résonateur ; un premier interrupteur (K1) étant connecté entre une borne d'entrée et le résonateur et commutable entre une position ouverte et une position fermée où une tension d'entrée (Vᵢₙ) est appliquée au résonateur.

Le dispositif comprend un module (28) de mesure d'une grandeur de sortie ; un module (32) de commande d'une commutation des interrupteurs pour alterner des phases à tension sensiblement constante et à charge sensiblement constante aux bornes du résonateur ; et un module (30) de détection d'un événement caractéristique dépendant de la grandeur de sortie ; et en cas de détection de l'événement, le module de commande (32) commandant le premier interrupteur en position ouverte pendant la durée d'au moins un cycle de résonance.

## Description

La présente invention concerne un dispositif électronique de pilotage d'un convertisseur d'énergie électrique apte à convertir une tension d'entrée en une tension de sortie.

L'invention concerne également un système de conversion d'énergie électrique comprenant un tel convertisseur et un tel dispositif électronique de pilotage du convertisseur.

L'invention concerne aussi un procédé de pilotage d'un tel convertisseur.

On connait un convertisseur comportant deux bornes d'entrée pour recevoir la tension d'entrée, deux bornes de sortie pour délivrer la tension de sortie, un résonateur piézoélectrique ayant deux bornes, et plusieurs interrupteurs connectés au résonateur piézoélectrique.

On connaît un dispositif électronique de pilotage comprenant un module de mesure configuré pour mesurer une grandeur de sortie du convertisseur ; et un module de commande configuré pour commander une commutation de chacun des interrupteurs, pour alterner des phases à tension sensiblement constante aux bornes du résonateur piézoélectrique et des phases à charge sensiblement constante aux bornes dudit résonateur piézoélectrique.

La caractéristique la plus intéressante de ce type de convertisseur est sa forte densité de puissance lorsqu'il fonctionne à quelques MHz. Cela est dû à la propriété mécanique et piézoélectrique de l'élément de stockage transitoire d'énergie, qui permet de réduire sa taille de manière linéaire avec l'augmentation de la densité de puissance, tandis que l'inductance présente une réduction avec un taux inférieur, ainsi que cela est décrit dans l'article de P. A. Kyaw and C. R. Sullivan, "Fundamental examination of multiple potential passive component technologies for future power electronics" 2015 IEEE 16th Workshop on Control and Modeling for Power Electronics (COMPEL).

Des stratégies de contrôle, c'est-à-dire de pilotage, de convertisseurs continu-continu ou DC-DC (de l'anglais *Direct Current- Direct Current*) avec résonateur piézoélectrique à six phases au cours d'un cycle de résonance, avec alternance de phases à tension sensiblement constante aux bornes du résonateur et de phases à charge sensiblement constante aux bornes dudit résonateur, sont décrites dans les articles suivants :
- J. J. Piel, J. D. Boles, J. H. Lang and D. J. Perreault, "Feedback Control for a Piezoelectric-Resonator-Based DC-DC Power Converter" 2021 IEEE 22nd Workshop on Control and Modelling of Power Electronics (COMPEL) ;
- B. Pollet, G. Despesse and F. Costa, "A New Non-Isolated Low-Power Inductorless Piezoelectric DC-DC Converter" in IEEE Transactions on Power Electronics, vol. 34, no. 11 ; et
- M. Touhami, G. Despesse, F. Costa and B. Pollet, "Implementation of Control Strategy for Step-down DC-DC Converter Based on Piezoelectric Resonator" 2020 22nd European Conférence on Power Electronics and Applications (EPE'20 ECCE Europe).

Ces stratégies répondent plutôt bien mais présentent une limite lorsque la puissance demandée en sortie du convertisseur chute brutalement. Cette chute de puissance brutale peut par exemple apparaitre si la charge change de mode, par exemple pour passer en veille, mais aussi à la fin du démarrage lorsque la tension de sortie atteint la tension cible. Le résonateur piézoélectrique a une amplitude d'oscillation qui dépend du courant demandé, un courant I_{L} interne au résonateur étant d'autant plus élevé que le courant de sortie Iₒᵤₜ est élevé. L'amplitude de ce mouvement mécanique ne peut pas être abaissé brutalement, et une puissance continue à être fournie à la sortie, alors que la tension de sortie cible est déjà atteinte, ce qui conduit à une surtension.

Pour s'affranchir de cet effet, le document FR 3 125 182 A1 propose d'introduire une puissance réactive en prolongeant un des paliers de tension d'une première demi-période sur une deuxième demi-période du cycle de résonance, de sorte que ce palier voit un courant aller, puis retour. Ainsi, soit une partie de l'énergie apportée par la tension d'entrée au résonateur est retournée à l'entrée, soit une partie de l'énergie apportée à la sortie est retournée vers le résonateur, soit les deux, ceci selon le palier qui est prolongé. Cette méthode est intéressante, mais nécessite le pilotage d'un angle supplémentaire ainsi que la gestion d'un stockage d'énergie.

L'article de E. A. Stolt, W. D. Braun and J. M. Rivas-Davila, "Forward-Zero Cycle Closed-Loop Control of Piezoelectric Resonator DC-DC Converters" 2022 IEEE 23rd Workshop on Control and Modeling for Power Electronics (COMPEL), décrit une régulation en mode élévation de tension (de l'anglais *burst*)*,* en maintenant un fonctionnement à fréquence fixe avec des angles de commande sensiblement constants, mais en court-circuitant le résonateur périodiquement pendant un cycle complet de résonance pour ajuster la puissance de sortie du convertisseur. Par exemple, en supprimant un cycle de résonance sur cinq, la puissance de sortie ne voit plus de puissance une période de résonance sur cinq et l'énergie apportée au résonateur est aussi réduite, limitant l'amplitude du courant dans le résonateur et donc la puissance transmise sur les quatre autres périodes. Cette méthode fonctionne, mais nécessite le pilotage d'un bloc de plusieurs cycles de résonance, c'est-à-dire de plusieurs périodes de résonance, par exemple de cinq périodes de résonance, car l'ajustement du courant ne s'effectue plus à l'échelle de la période, mais de ladite pluralité de périodes. Outre la difficulté de prédire les instants de commutation sur ces multiples périodes, il faut par ailleurs disposer en sortie d'un filtrage sur ladite pluralité de périodes, ce qui diminue la réactivité du convertisseur, et augmente la taille d'éléments passifs de filtrage.

Le but de l'invention est alors de proposer un dispositif électronique de pilotage, et un procédé de pilotage associé, permettant un pilotage amélioré du convertisseur d'énergie électrique.

A cet effet, l'invention a pour objet un dispositif électronique de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur piézoélectrique ayant deux bornes, et plusieurs interrupteurs connectés au résonateur piézoélectrique ; l'un des interrupteurs, dit premier interrupteur, étant connecté entre l'une des bornes d'entrée et le résonateur piézoélectrique, le premier interrupteur étant commutable entre une position ouverte et une position fermée dans laquelle la tension d'entrée est appliquée aux bornes du résonateur piézoélectrique ;
le dispositif électronique de pilotage comprenant :
   - un module de mesure configuré pour mesurer une grandeur de sortie du convertisseur ;
   - un module de commande configuré pour commander une commutation de chacun des interrupteurs, pour alterner des phases à tension sensiblement constante aux bornes du résonateur piézoélectrique et des phases à charge sensiblement constante aux bornes dudit résonateur piézoélectrique ;
   - un module de détection configuré pour détecter au moins un événement caractéristique dépendant de la grandeur de sortie mesurée ;
le module de commande étant configuré pour, en cas de détection de l'au moins un événement caractéristique, commander le premier interrupteur en position ouverte pendant la durée d'au moins un cycle de résonance du résonateur piézoélectrique.

Avec le dispositif électronique de pilotage selon l'invention, la commande - en cas de détection de l'au moins un événement caractéristique - du premier interrupteur en position ouverte pendant la durée d'un ou plusieurs cycles successifs de résonance du résonateur piézoélectrique permet de supprimer la phase du cycle de résonance durant laquelle la tension d'entrée est appliquée aux bornes du résonateur piézoélectrique, c'est-à-dire de supprimer la phase d'apport d'énergie au résonateur piézoélectrique, également appelée phase énergisante.

Cette suppression de la phase énergisante pendant un ou plusieurs cycles successifs de résonance du résonateur piézoélectrique, c'est-à-dire pendant une ou plusieurs périodes successives de résonance, permet alors de réduire rapidement l'énergie totale dans le résonateur piézoélectrique et, par conséquent, à la sortie du convertisseur, sans perdre la synchronisation entre le dispositif de pilotage et les vibrations du résonateur piézoélectrique.

Autrement dit, en empêchant un apport d'énergie du résonateur piézoélectrique pendant toute la durée d'au moins un cycle de résonance, voire pendant toute la durée de plusieurs cycles successifs de résonance, l'énergie stockée dans le résonateur piézoélectrique diminue rapidement, ce qui permet de remédier à l'évènement détecté.

De préférence, l'évènement détecté auquel il est remédié est un événement de sur-énergie, lorsque la grandeur de sortie mesurée est supérieure à une grandeur seuil.

En variante, ou en complément, l'évènement détecté auquel il est remédié est un événement dit d'énergie minimale, lorsque la grandeur de sortie mesurée est supérieure à une grandeur cible et que la durée pendant laquelle le premier interrupteur est en position fermée au cours d'un cycle respectif de résonance a diminué jusqu'à une durée minimale, et ne peut alors plus diminuer davantage. L'événement d'énergie minimale correspond alors au cas où la phase énergisante est à sa durée minimale, et ne peut pas être raccourcie davantage pour réduire encore l'apport d'énergie au résonateur piézoélectrique, et que dans le même temps, la grandeur de sortie est déjà supérieure à la grandeur cible souhaitée.

Suivant d'autres aspects avantageux de l'invention, le dispositif électronique de pilotage comprend une ou plusieurs des caractéristiques suivantes, prises isolément ou suivant toutes les combinaisons techniquement possibles :
- l'au moins un événement caractéristique comporte un événement de sur-énergie, détecté lorsque la grandeur de sortie mesurée est supérieure à une grandeur seuil ;
- l'au moins un événement caractéristique comporte un événement d'énergie minimale, détecté lorsque la grandeur de sortie mesurée est supérieure à une grandeur cible et que la durée pendant laquelle le premier interrupteur est en position fermée au cours d'un cycle respectif de résonance est inférieure ou égale à une durée minimale ;
- la grandeur seuil est supérieure à la grandeur cible.
   la grandeur seuil étant de préférence égale à un multiple de la grandeur cible, le multiple étant compris entre 1,02 et 1,3 ;
   le multiple étant de préférence encore compris entre 1,02 et 1,1 ; de préférence encore égal à 1,05 ;
- la grandeur de sortie est la tension de sortie ;
- le module de commande est configuré pour commander le premier interrupteur en position ouverte pendant la durée de plusieurs cycles successifs de résonance du résonateur piézoélectrique ;
- le module de commande est configuré pour commander le premier interrupteur en position ouverte tant que l'au moins un événement caractéristique est détecté ;
- le résonateur piézoélectrique comporte l'une des constitutions parmi le groupe consistant en : un unique élément piézoélectrique ; plusieurs éléments piézoélectriques connectés en série ; plusieurs éléments piézoélectriques connectés en parallèle ; un élément piézoélectrique et un condensateur auxiliaire connectés en série ; un élément piézoélectrique et un condensateur auxiliaire connectés en parallèle ; et un agencement de plusieurs branches parallèles, chaque branche comportant un ou plusieurs éléments piézoélectriques connectés en série ou un condensateur auxiliaire ;
le condensateur auxiliaire étant de préférence de capacité supérieure, de préférence encore au moins trois fois supérieure, à une capacité de référence du ou des éléments piézoélectriques, chaque élément piézoélectrique étant modélisé sous forme d'un condensateur et d'une branche résonante connectée en parallèle du condensateur, la capacité de référence étant la capacité dudit condensateur.

L'invention concerne également un système de conversion d'énergie électrique comprenant :
- un convertisseur d'énergie électrique comportant deux bornes d'entrée pour recevoir la tension d'entrée, deux bornes de sortie pour délivrer la tension de sortie, un résonateur piézoélectrique ayant deux bornes, et plusieurs interrupteurs connectés au résonateur piézoélectrique, au moins l'un des interrupteurs, dit premier interrupteur, étant connecté entre l'une des bornes d'entrée et le résonateur piézoélectrique, l'au moins un premier interrupteur étant commutable entre une position ouverte et une position fermée dans laquelle la tension d'entrée est appliquée aux bornes du résonateur piézoélectrique ; et
- un dispositif électronique de pilotage du convertisseur d'énergie électrique ; le dispositif électronique de pilotage étant tel que défini ci-dessus.

L'invention concerne aussi un procédé de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur piézoélectrique ayant deux bornes, et plusieurs interrupteurs connectés au résonateur piézoélectrique ; l'un des interrupteurs, dit premier interrupteur, étant connecté entre l'une des bornes d'entrée et le résonateur piézoélectrique, le premier interrupteur étant commutable entre une position ouverte et une position fermée dans laquelle la tension d'entrée est appliquée aux bornes du résonateur piézoélectrique ;
le procédé étant mis en oeuvre par un dispositif électronique de pilotage et comprenant les étapes suivantes :
   - mesure d'une grandeur de sortie du convertisseur ;
   - commande d'une commutation de chacun des interrupteurs, pour alterner des phases à tension sensiblement constante aux bornes du résonateur piézoélectrique et des phases à charge sensiblement constante aux bornes dudit résonateur piézoélectrique ;
le procédé comprenant en outre l'étape suivante :
   - détection d'au moins un événement caractéristique dépendant de la grandeur de sortie mesurée ;
l'étape de commande comportant, en cas de détection de l'au moins un événement caractéristique, une commande du premier interrupteur en position ouverte pendant la durée d'au moins un cycle de résonance du résonateur piézoélectrique.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système électronique de conversion d'énergie électrique selon l'invention, comprenant un convertisseur d'énergie électrique comportant un résonateur piézoélectrique et plusieurs interrupteurs connectés au résonateur piézoélectrique; et un dispositif électronique de pilotage du convertisseur d'énergie électrique ;
- la figure 2 est une représentation schématique du dispositif de pilotage de la figure 1 ;
- la figure 3 est une vue analogue à la figure 2 détaillant schématiquement une unité de détection d'un événement d'énergie minimale et une unité de détection d'un événement de sur-énergie, incluses dans le dispositif de pilotage des figures 1 et 2 ;
- la figure 4 est un organigramme d'un procédé, selon l'invention, de pilotage d'un convertisseur d'énergie électrique, le procédé étant mis en oeuvre par le dispositif de pilotage de la figure 1 ;
- la figure 5 représente des courbes de la tension et de l'intensité aux bornes du résonateur piézoélectrique de la figure 1, en mode élévateur de tension, et respectivement en mode abaisseur de tension, du convertisseur d'énergie électrique ; et
- la figure 6 représente la courbe de la tension aux bornes du résonateur piézoélectrique de la figure 1, en cas de détection de l'évènement d'énergie minimale ou de l'évènement de sur-énergie, entrainant la suppression d'une phase (à tension sensiblement constante) d'apport d'énergie au résonateur piézoélectrique.

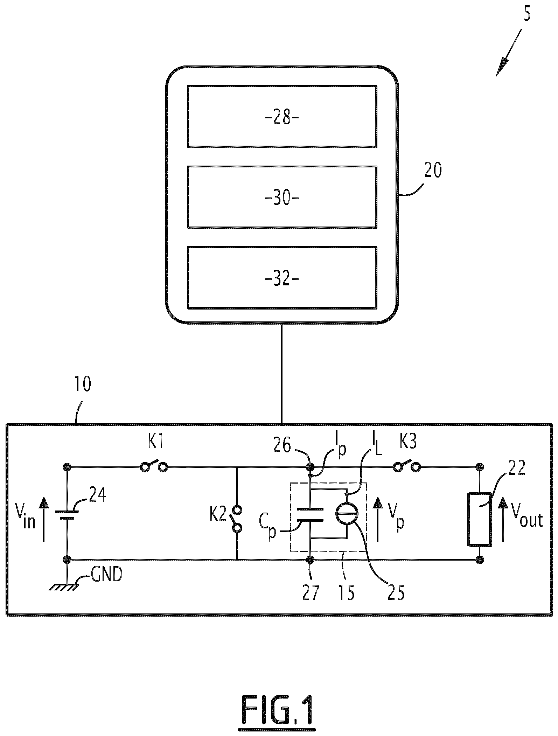

Sur la figure 1, un système électronique de conversion d'énergie électrique 5 comprend un convertisseur d'énergie électrique 10 comportant un résonateur piézoélectrique 15 et plusieurs interrupteurs K1, K2, K3 connectés au résonateur piézoélectrique 15 ; et un dispositif électronique 20 de pilotage du convertisseur d'énergie électrique 10. L'énergie électrique est typiquement une tension, ou en variante un courant ou une puissance.

Le système électronique de conversion d'énergie électrique 5 est typiquement un système de conversion en une énergie électrique continue, tel qu'un système de conversion continu-continu apte à convertir une première énergie électrique continue reçue en entrée en une deuxième énergie électrique continue délivrée en sortie, ou encore un système de conversion alternatif-continu apte à convertir une énergie électrique alternative reçue en entrée en une énergie électrique continue délivrée en sortie du système de conversion 5.

Lorsque le système de conversion d'énergie électrique 5 est un système de conversion alternatif-continu, le système de conversion d'énergie électrique 5 comprend de préférence en outre un redresseur de tension, non représenté, connecté en entrée du convertisseur d'énergie électrique 10 et apte à redresser la tension électrique alternative reçue en entrée du système de conversion 5 pour délivrer une tension électrique redressée en entrée du convertisseur 10, le convertisseur d'énergie électrique 10 étant de préférence un convertisseur continu-continu apte à convertir une énergie électrique continue en une autre énergie électrique continue. Le redresseur de tension est par exemple un pont redresseur, tel qu'un pont de diodes. En variante, le redresseur de tension est formé en tout ou partie par des interrupteurs du convertisseur 10, par exemple via des interrupteurs bidirectionnels en tension.

L'homme du métier observera que ces différents exemples pour le système conversion 5, qu'il s'agisse d'un système de conversion continu-continu ou bien d'un système de conversion alternatif-continu, sont également présentés dans les documents FR 3 086 471 A1 et FR 3 086 472 A1, notamment en regard de leurs figures 1 à 3,10,15,17 et 19 à 20.

Le convertisseur d'énergie électrique 10 est de préférence un convertisseur continu-continu, et est également appelé convertisseur DC-DC. Le convertisseur continu-continu a généralement pour rôle de réguler une tension d'alimentation Vₒᵤₜ d'une charge 22 à une valeur stable, en étant alimenté par une source d'énergie 24 fournissant une tension sensiblement continue Vin. La source d'énergie 24 est par exemple une batterie ou un panneau solaire.

Le convertisseur d'énergie électrique 10 est alors configuré pour élever la valeur de la tension continue entre son entrée et sa sortie, et est alors également appelé convertisseur continu-continu élévateur, ou encore convertisseur continu-continu fortement élévateur ; ou bien est configuré pour abaisser la valeur de la tension continue entre son entrée et sa sortie, et est alors appelé convertisseur continu-continu abaisseur, avec également une variante de convertisseur continu-continu fortement abaisseur.

Lorsque le convertisseur d'énergie électrique 10 est un convertisseur continu-continu abaisseur, la valeur de la tension d'entrée correspond typiquement à la tension Vᵢₙ de la source d'énergie 24, et la valeur de la tension de sortie correspond à la tension Vₒᵤₜ aux bornes de la charge 22, la tension Vin étant alors supérieure à la tension Vₒᵤₜ.

Lorsque le convertisseur d'énergie électrique 10 est un convertisseur continu-continu élévateur, la valeur de la tension d'entrée correspond aussi typiquement à la tension Vin de la source d'énergie 24, et la valeur de la tension de sortie correspond à la tension Vₒᵤₜ aux bornes de la charge 22, la tension Vᵢₙ étant alors inférieure à la tension Vₒᵤₜ.

Lorsque le convertisseur d'énergie électrique 10 est un convertisseur continu-continu fortement abaisseur, la valeur de la tension d'entrée correspond par exemple à la différence de tension (Vᵢₙ-Vₒᵤₜ), et la valeur de la tension de sortie correspond par exemple à la tension Vₒᵤₜ, la différence de tension (Vᵢₙ-Vₒᵤₜ) étant nettement supérieure à la tension Vₒᵤₜ.

Lorsque le convertisseur d'énergie électrique 10 est un convertisseur continu-continu abaisseur, selon une variante d'abaisseur, la valeur de la tension d'entrée correspond par exemple à la différence de tension (Vᵢₙ-Vₒᵤₜ), et la valeur de la tension de sortie correspond à la tension Vₒᵤₜ aux bornes de la charge 22, la différence de tension (Vᵢₙ-Vₒᵤₜ) étant supérieure à la tension Vₒᵤₜ.

Le convertisseur d'énergie électrique 10 comporte le résonateur piézoélectrique 15, et le dispositif de pilotage 20 est configuré pour faire fonctionner le matériau piézoélectrique du résonateur piézoélectrique 15 à sa résonance afin d'exploiter des phases de transfert de charge permettant de s'affranchir de l'utilisation d'un élément inductif, tout en régulant la tension de sortie en conservant la résonance du matériau piézoélectrique, c'est-à-dire avec des cycles de commutation répétés à une fréquence de fonctionnement dépendant de la fréquence de résonance du résonateur piézoélectrique 15, et en ajustant les durées de phases de commutation respectives à l'intérieur du cycle de résonance.

Comme connu en soi, l'oscillation mécanique du résonateur piézoélectrique 15 est approximativement sinusoïdale. Une augmentation ou une diminution de l'énergie stockée sur une période conduit respectivement à une augmentation ou à une diminution de l'amplitude d'oscillation. Par ailleurs, lors d'une phase à charge sensiblement constante aux bornes du résonateur piézoélectrique 15, c'est-à-dire lorsque le résonateur piézoélectrique 15 est placé dans un circuit électrique sensiblement ouvert, avec un faible échange de charges électriques entre le résonateur piézoélectrique 15 et l'extérieur, une augmentation de l'amplitude des oscillations engendre une augmentation de la vitesse de variation de la tension Vₚ aux bornes du résonateur piézoélectrique 15, et lors d'une phase à tension sensiblement constante aux bornes du résonateur piézoélectrique 15, cette augmentation d'amplitude d'oscillation conduit à une augmentation du courant échangé entre le résonateur piézoélectrique 15 et l'extérieur.

Par charge sensiblement constante, on entend un échange d'une charge avec l'extérieur qui est inférieur à 30 % de la charge qui aurait été échangée avec l'extérieur si la tension avait été maintenue constante. Autrement dit, par charge sensiblement constante, on entend une variation de charge inférieure à 30 % de la charge qui aurait été échangée avec l'extérieur du résonateur piézoélectrique 15 si la tension aux bornes du résonateur piézoélectrique 15 avait été maintenue constante sur la durée temporelle considérée.

Par circuit électrique sensiblement ouvert, on entend un circuit dont un éventuel courant de fuite conduit à une variation de charge du résonateur piézoélectrique 15 inférieure à 30 % de la charge qui aurait été échangée avec l'extérieur du résonateur piézoélectrique 15 si la tension aux bornes du résonateur piézoélectrique 15 avait été maintenue constante sur la durée temporelle considérée.

Par tension sensiblement constante, on entend une variation de tension inférieure à 20%, de préférence inférieure à 10%, de la tension d'entrée ou de sortie du convertisseur 10. À titre d'exemple, si la tension d'entrée du convertisseur 10 est égale à 100V, alors la variation de tension lors de chaque phase à tension sensiblement constante, c'est-à-dire sur chaque palier à tension sensiblement constante, est inférieure à 20% de cette tension, c'est-à-dire inférieure à 20V ; de préférence inférieure à 10 % de cette tension, c'est-à-dire inférieure à 10V.

Le convertisseur 10 comporte alors plusieurs interrupteurs K1, K2, K3 aptes à être commandés pour alterner des phases à tension sensiblement constante et des phases à charge sensiblement constante aux bornes du résonateur piézoélectrique 15. Cette alternance de phases à tension sensiblement constante et de phases à charge sensiblement constante est typiquement effectuée à l'intérieur de périodes de durée sensiblement constante correspondant à la fréquence de fonctionnement du convertisseur 10, dépendant de la fréquence d'oscillation, également appelée fréquence propre, du résonateur piézoélectrique 15. Les phases à charge sensiblement constante permettent, en régime établi ou permanent, de passer d'une tension constante à une autre et de fermer les interrupteurs qui doivent l'être lorsque la tension à leurs bornes est de préférence nulle afin d'avoir une commutation dite à zéro de tension, également appelée commutation ZVS (de l'anglais *Zéro Voltage Switching*)*.*

Chaque interrupteur du convertisseur 10, à savoir un premier interrupteur K1, un deuxième interrupteur K2, et en complément un troisième interrupteur K3, comprend par exemple un transistor et une diode antiparallèle (non représentés) intrinsèque au transistor.

Le transistor est, par exemple, un transistor à effet de champ à grille isolée, également appelé MOSFET (de l'anglais *Metal Oxide Semiconductor Field Effect Transistor*)*.* En variante, le transistor 50 est un transistor bipolaire ; un transistor bipolaire à grille isolée, également appelé IGBT (de l'anglais *Insulated Gate Bipolar Transistor*) ; un transistor à base de silicium (Si), un transistor à base de GaN (de l'anglais *Gallium Nitride*) *;* un transistor à base de carbure de silicium (SiC), ou un transistor à base de diamant, ou encore un thyristor, ou encore un switch mécanique, tel qu'un micro-switch MEMS (de l'anglais *MicroElectroMechanical System).*

Le premier interrupteur K1 est connecté entre l'une des bornes d'entrée et le résonateur 15, le premier interrupteur K1 étant commutable entre une position ouverte et une position fermée dans laquelle la tension d'entrée Vin est appliquée aux bornes du résonateur 15.

Le deuxième interrupteur K2 est connecté aux bornes du résonateur piézoélectrique 15, le deuxième interrupteur K2 étant commutable entre une position ouverte et une position fermée dans laquelle la tension est nulle aux bornes du résonateur 15.

Le troisième interrupteur K3 est connecté entre l'une des bornes de sortie et le résonateur 15, le troisième interrupteur K3 étant commutable entre une position ouverte et une position fermée dans laquelle une énergie du résonateur 15 est restituée à la tension de sortie Vₒᵤₜ.

La fréquence d'oscillation est la fréquence à laquelle oscille le résonateur 12, tel que le résonateur piézoélectrique 15 et par conséquent son courant I_{L} sur sa branche motionnelle (branche R-L-C) de son modèle équivalent autour du mode de résonance sélectionné. Le courant I_{L} peut être déduit soit en observant l'évolution de la tension Vₚ lorsque le résonateur est isolé ou soit en observant son courant de sortie Iₚ lors des phases à tension constante. Le cycle de conversion est synchronisé sur un mouvement mécanique du résonateur piézoélectrique 15, et la fréquence du pilotage est alors calée sur la fréquence d'oscillation mécanique. En pratique, cette fréquence d'oscillation dépend du point de fonctionnement du convertisseur 10 : valeurs des trois paliers de tension et du courant de sortie. En fonction du point de fonctionnement, cette fréquence d'oscillation évolue typiquement entre la fréquence de résonance dite série du piézoélectrique (œs=1/>/(LC) où L et C correspondent aux inductance et capacité d'une branche résonante 25 décrite ci-après) et la fréquence de résonance dite parallèle du piézoélectrique (œp=1/>/(L*C*Cp/(C+Cp))), également respectivement appelés fréquence de résonance et fréquence d'antirésonance du résonateur piézoélectrique 15. La fréquence de fonctionnement du convertisseur 10 est alors comprise entre ces deux fréquences de résonance et d'antirésonance du résonateur piézoélectrique 15. Le point de fonctionnement varie lentement au regard de la fréquence d'oscillation du résonateur piézoélectrique 15. Le point de fonctionnement évolue typiquement à moins de 10kHz, alors que la fréquence d'oscillation du résonateur piézoélectrique 15 est typiquement supérieure ou égale à 100kHz. De ce fait, la fréquence de fonctionnement du convertisseur 10 évolue peu d'une période à la suivante.

Le nombre total de phases à tension sensiblement constante et de phases à charge sensiblement constante aux bornes du résonateur piézoélectrique 15 au cours d'un cycle de résonance est généralement supérieur ou égal à six dans un mode de fonctionnement nominal du convertisseur 10. Dans l'exemple de la figure 1, ce nombre total de phases est égal à six en mode de fonctionnement nominal du convertisseur 10.

Le résonateur piézoélectrique 15 est connu en soi, et est typiquement modélisé, proche du mode de résonnance exploité, sous la forme d'un condensateur Cp et de la branche résonante 25 connectée en parallèle du condensateur Cp, le condensateur Cp et la branche résonante 25 étant connectés entre des première 26 et deuxième 27 électrodes du résonateur piézoélectrique 15. Les première 26 et deuxième 27 électrodes forment les bornes du résonateur piézoélectrique 15.

Dans l'exemple de la figure 1, le résonateur piézoélectrique 15 comporte un unique élément piézoélectrique.

En variante non représentée, le résonateur piézoélectrique 15 comporte plusieurs éléments piézoélectriques connectés en série. En variante, le résonateur piézoélectrique 15 comporte plusieurs éléments piézoélectriques connectés en parallèle. En variante, le résonateur piézoélectrique 15 comporte un élément piézoélectrique et un condensateur auxiliaire connectés en série. En variante, le résonateur piézoélectrique 15 comporte un élément piézoélectrique et un condensateur auxiliaire connectés en parallèle. En variante encore, le résonateur piézoélectrique 15 comporte un agencement de plusieurs branches parallèles, chaque branche comportant un ou plusieurs éléments piézoélectriques connectés en série ou un condensateur auxiliaire.

Selon les variantes concernées, le condensateur auxiliaire est avantageusement de capacité supérieure, de préférence encore au moins trois fois supérieure, à une capacité de référence du ou des éléments piézoélectriques, telle que la capacité du condensateur Cp dans l'exemple de la figure 1, chaque élément piézoélectrique étant modélisé sous forme d'un condensateur et d'une branche résonante connectée en parallèle du condensateur, la capacité de référence étant la capacité dudit condensateur.

Dans l'exemple de la figure 1, le premier interrupteur K1 est connecté entre une borne positive d'entrée et la première électrode 26 du résonateur 15, le deuxième interrupteur K2 est connecté entre les première 26 et deuxième 27 électrodes du résonateur piézoélectrique 15, et le troisième interrupteur K3 est connecté entre la première électrode 26 du résonateur 15 et une borne positive de sortie et le résonateur 15. Par borne positive, l'homme du métier comprendra qu'il s'agit de la borne qui est au potentiel le plus élevé de la tension d'entrée Vᵢₙ, respectivement de la tension de sortie Vₒᵤₜ. Dans l'exemple de la figure 1, les bornes négatives d'entrée et de sortie sont connectées à une masse électrique GND.

La branche résonante 25 est typiquement une branche RLC formée d'un condensateur auxiliaire, d'une résistance et d'une inductance connectés en série (non représentés). La tension Vₚ aux bornes du résonateur piézoélectrique 15 correspond alors typiquement à la tension aux bornes du condensateur Cp.

La capacité du condensateur auxiliaire est avantageusement supérieure à la capacité du condensateur Cp, notamment au moins trois fois supérieure.

Le dispositif de pilotage 20 comprend un module de mesure 28, un module de détection 30 et un module de commande 32.

Le module de mesure 28, le module de détection 30, et le module de commande 32 sont par exemple réalisés chacun sous forme d'un circuit électronique comportant un ou plusieurs composants électroniques, et notamment des comparateurs lorsque des comparaisons sont effectuées.

En variante, le module de mesure 28, le module de détection 30, et le module de commande 32 sont chacun réalisés sous forme d'un composant logique programmable, tel qu'un FPGA (de l'anglais Field Programmable Gate Array), ou sous forme d'un circuit intégré, tel qu'un ASIC (de l'anglais Application Spécifie Integrated Circuit) ou encore sous forme d'un calculateur, tel qu'un microcontrôleur, un processeur. En variante encore, le module de mesure 28, le module de détection 30 et le module de commande 32 sont implémentés ensemble au sein d'un unique composant matériel, tel qu'un unique composant logique programmable, un unique circuit intégré, ou unique calculateur.

Le module de mesure 28 est configuré pour mesurer une grandeur de sortie Gₒᵤₜ. La grandeur de sortie Gₒᵤₜ est par exemple la tension de sortie Vₒᵤₜ. En variante, la grandeur de sortie Gₒᵤₜ est un courant de sortie Iₒᵤₜ. En variante encore, la grandeur de sortie Gₒᵤₜ est une puissance de sortie Pₒᵤₜ.

Le module de détection 30 est configuré pour détecter au moins un événement caractéristique dépendant de la grandeur de sortie Gₒᵤₜ mesurée. Le module de détection 30 est avantageusement apte à détecter un événement de sur-énergie et/ou un événement d'énergie minimale. Autrement dit, un événement caractéristique respectif est avantageusement l'évènement de sur-énergie, ou encore l'évènement d'énergie minimale.

L'événement de sur-énergie est détecté lorsque la grandeur de sortie Gₒᵤₜ, telle que la tension de sortie Vₒᵤₜ, est supérieure à une grandeur seuil Gₜₕᵣ.

L'événement d'énergie minimale est détecté lorsque la grandeur de sortie Gout, telle que la tension de sortie Vₒᵤₜ, est supérieure à une grandeur cible Gₜₐᵣ et qu'une durée D_{K1} pendant laquelle le premier interrupteur K1 est en position fermée au cours d'un cycle respectif de résonance a diminué jusqu'à une durée minimale Dₘᵢₙ.

La grandeur seuil Gₜₕᵣ est typiquement supérieure à la grandeur cible Gₜₐᵣ. L'homme du métier observera que la grandeur cible Gₜₐᵣ forme alors une deuxième grandeur seuil, distincte de la grandeur seuil G_{tbr}, et de préférence inférieure à la grandeur seuil Gₜₕᵣ.

Avantageusement, la grandeur seuil Gₜₕᵣ est égale à un multiple de la grandeur cible Gₜₐᵣ. Le multiple est typiquement compris entre 1,02 et 1,3 ; de préférence compris entre 1,02 et 1,1 ; de préférence encore égal à 1,05.

Le convertisseur 10 possède une limite basse en puissance, caractéristique des éléments composant le convertisseur d'énergie 10. La durée minimale Dₘᵢₙ dépend alors de la limite basse en puissance, La durée minimale Dₘᵢₙ ne pouvant en effet pas tendre vers zéro. La durée minimale Dₘᵢₙ est par exemple de l'ordre de 2 nanosecondes.

Le module de commande 32 est configuré pour commander une commutation de chacun des interrupteurs K1, K2 et K3, typiquement pour alterner des phases à tension sensiblement constante aux bornes du résonateur piézoélectrique 15 et des phases à charge sensiblement constante aux bornes dudit résonateur piézoélectrique 15.

Le module de commande 32 est, selon l'invention, configuré pour, en cas de détection de l'au moins un événement caractéristique, commander le premier interrupteur K1 en position ouverte pendant la durée d'au moins un cycle de résonance du résonateur piézoélectrique 15. Le premier interrupteur K1 est avantageusement commandé pour rester en position ouverte tant que au moins un événement caractéristique est détecté par le module de détection 30. Autrement dit, le premier interrupteur K1 est avantageusement commandé, puis maintenu en position ouverte aussi longtemps que la présence de l'au moins un événement caractéristique est détectée.

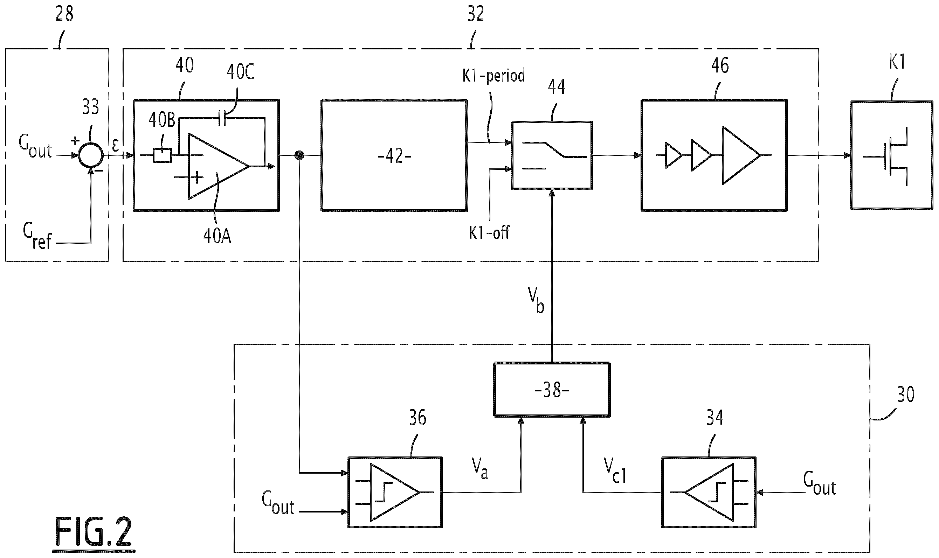

Comme visible sur la figure 2 illustrant un exemple du dispositif de pilotage 20, le module de mesure 28 comporte un additionneur 33 connecté en sortie d'une unité, non représentée, de mesure de la grandeur de sortie Gₒᵤₜ. Le module de détection 30 comporte une première unité 34 de détection de l'évènement de sur-énergie, une deuxième unité 36 de détection de l'évènement d'énergie minimale et une porte logique OU 38 (de l'anglais *OR logic gate*)*.* Le module de commande 32 comporte un correcteur 40, un générateur 42 d'un signal de commande, un multiplexeur 44 une unité 46 de pilotage d'un interrupteur, tel que le premier interrupteur K1.

L'additionneur 33 est apte à recevoir d'une part la grandeur de sortie Gₒᵤₜ, telle que la tension de sortie Vₒᵤₜ, et d'autre part une grandeur de référence G_{ref}, telle qu'une tension de référence V_{ref}, puis pour délivrer en sortie une erreur ε correspondant à la différence entre la grandeur de sortie Gₒᵤₜ et la grandeur de référence G_{ref}. L'additionneur 33 est typiquement configuré pour soustraire la grandeur de référence G_{ref} à la grandeur de sortie Gₒᵤₜ.

La première unité 34 de détection de l'évènement de sur-énergie est apte à recevoir en entrée la grandeur de sortie Gₒᵤₜ, telle que la tension de sortie Vₒᵤₜ, et à délivrer en sortie une tension V_{c1}, la tension V_{c1} étant typiquement en forme d'une tension en créneau avec un niveau logique haut ou bas selon que l'événement de sur-énergie a été détecté ou non.

La deuxième unité 36 de détection de l'évènement d'énergie minimale est connectée en sortie du correcteur 40. La deuxième unité de détection 36 est apte à recevoir également en entrée la grandeur de sortie Gₒᵤₜ, telle que la tension de sortie Vₒᵤₜ, et à délivrer en sortie une tension Vₐ, la tension Vₐ étant typiquement aussi en forme d'une tension en créneau avec un niveau logique haut ou bas selon que l'événement d'énergie minimale a été détecté ou non.

La porte logique OU 38 est connectée en sortie de la première unité 34 et de la deuxième unité 36, et alors apte à recevoir en entrée la tension V_{c1} et la tension Vₐ.

La porte logique OU 38 est apte à délivrer en sortie une tension V_{b}, la tension V_{b} étant typiquement aussi en forme d'une tension en créneau avec un niveau logique haut si V_{c1} et/ou Vₐ présente(nt) un niveau logique haut, et avec un niveau logique bas sinon.

Le correcteur 40 est typiquement configuré pour effectuer une régulation de la grandeur de sortie Gₒᵤₜ par rapport à la grandeur de référence G_{ref}, en recevant en entrée l'erreur ε issue de l'additionneur 33, correspondant à la grandeur de sortie Gₒᵤₜ moins la grandeur de référence G_{ref}, et en effectuant ensuite une intégration de cette erreur ε.

Le correcteur 40 comprend par exemple un amplificateur opérationnel 40A, une résistance électrique 40B et une boucle de rétroaction avec un condensateur 40C. La boucle de rétroaction relie la sortie de l'amplificateur opérationnel 40A à son entrée négative. La résistance électrique 40B est connectée entre l'entrée du correcteur 40 recevant l'erreur ε et l'entrée négative de l'amplificateur opérationnel 40A. Il est bien entendu que d'autres types de correcteurs 40 peuvent être utilisés.

Le générateur 42 de signal de commande est connecté en sortie du correcteur 40, et est configuré pour générer un signal périodique de commande du premier interrupteur K1 noté K1-period en fonction du signal en sortie du correcteur 40.

Le multiplexeur 44 est connecté en sortie du générateur 42 et de la porte logique OU 38, et alors apte à recevoir en entrée les signaux de commande en ouverture K1-off et en fermeture périodique K1-period, ainsi que la tension V_{b}.

Le multiplexeur 44 est par exemple apte à sélectionner le signal de commande en ouverture K1-off si la tension V_{b} présente un niveau logique haut, et à ne pas sélectionner de signal de commande en particulier si la tension V_{b} présente un niveau logique bas.

L'unité de pilotage 46 est connectée en sortie du multiplexeur 44, et alors apte à recevoir en entrée le signal de commande en ouverture K1-off ou respectivement en fermeture périodique K1-period, issu du multiplexeur 44.

L'unité de pilotage 46 est connectée en entrée du premier interrupteur K1 et est configurée pour appliquer le signal de commande, soit d'ouverture et de maintien ouvert K1-off, ou soit de fermeture périodique K1-period, à une électrode de commande du premier interrupteur K1, telle qu'une électrode de grille lorsque le premier interrupteur K1 comporte un transistor tel qu'un MOSFET ou un IGBT.

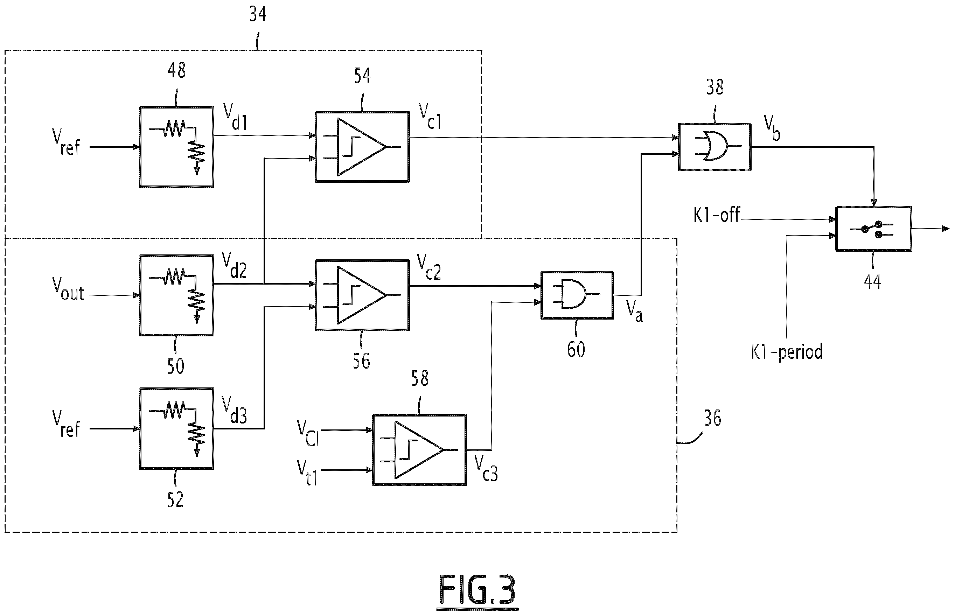

Dans l'exemple de la figure 3, la première unité 34 de détection de l'évènement de sur-énergie comprend un premier diviseur de tension 48 et un premier comparateur 54.

Dans l'exemple de la figure 3, la deuxième unité 36 de détection de l'évènement d'énergie minimale comprend un deuxième diviseur de tension 50, un troisième diviseur de tension 52, un deuxième comparateur 56, un troisième comparateur 58 et une porte logique ET 60 (de l'anglais *AND logic gate*)*.*

Les diviseurs de tension 48, 50 ,52 sont typiquement configurés pour délivrer une tension en sortie plus faible que leur tension en entrée. Le premier diviseur de tension 48 est apte à recevoir en entrée la grandeur de référence G_{ref}, telle que la tension de référence V_{ref}, et apte à délivrer en sortie une tension V_{d1}, la tension V_{d1} étant une fraction de la tension en entrée V_{ref}.

Le deuxième diviseur de tension 50 est apte à recevoir en entrée la grandeur de sortie Gₒᵤₜ, telle que la tension de sortie Vₒᵤₜ, et apte à délivrer en sortie une tension V_{d2}, la tension V_{d2} étant une fraction de la tension en entrée Vₒᵤₜ.

Le troisième diviseur de tension 52 est apte à recevoir en entrée la grandeur de référence G_{ref}, telle que la tension de référence V_{ref}, et apte à délivrer en sortie une tension V_{d3}, la tension V_{d3} étant une fraction de la tension en entrée V_{ref}.

Les facteurs de division mis en oeuvre respectivement par les premier, deuxième et troisième diviseurs de tension 48, 50 ,52 sont tels que, d'une part, le rapport entre les tensions V_{d2} et V_{d3} est égal au rapport entre la grandeur de sortie Gₒᵤₜ et la grandeur cible Gₜₐᵣ, notamment égal au rapport entre la tension de sortie Vₒᵤₜ et une tension cible Vₜₐᵣ ; et d'autre part, que le rapport entre les tensions V_{d2} et V_{d1} est égal au rapport entre la grandeur de sortie Gₒᵤₜ et la grandeur seuil Gₜₕᵣ, notamment égal au rapport entre la tension de sortie Vₒᵤₜ et une tension seuil Vₜₕᵣ.

Le premier comparateur 54 est connecté en sortie du premier diviseur de tension 48 et du deuxième diviseur de tension 50, et alors apte à recevoir en entrée la tension V_{d1} et la tension V_{d3}.

Le premier comparateur 54 est apte à délivrer en sortie la tension V_{c1}, la tension V_{c1} étant typiquement en forme d'une tension en créneau avec un niveau logique haut si la tension V_{d2} est supérieure à la tension V_{d1}, et avec un niveau logique bas sinon.

Le deuxième comparateur 56 est connecté en sortie du deuxième diviseur de tension 50 et du troisième diviseur de tension 52, et alors apte à recevoir en entrée la tension V_{d2} et la tension V_{d3}.

Le deuxième comparateur 56 est apte à délivrer en sortie une tension V_{c2}, la tension V_{c2} étant typiquement en forme d'une tension en créneau avec un niveau logique haut si la tension V_{d2} est supérieure à la tension V_{d3}, et avec un niveau logique bas sinon.

Le troisième comparateur 58 est apte à recevoir en entrée une tension V_{CI} et une tension Vₜ₁. La tension V_{CI} est une tension liée à la durée minimale Dₘᵢₙ et la tenson Vₜ₁ est une tension liée à la durée D_{K1} de fermeture de l'interrupteur K1 lors du cycle respectif, les tensions V_{CI} et Vₜ₁ étant choisies de sorte que le rapport entre les tensions Vₜ₁ et V_{Cl} soit égal au rapport entre les durées D_{K1} et Dₘᵢₙ.

Le troisième comparateur 58 est apte à délivrer en sortie la tension V_{c3}, la tension V_{c3} étant typiquement en forme d'une tension en créneau avec un niveau logique haut si la tension Vₜ₁ devient inférieure à la tension V_{CI}, et avec un niveau logique bas sinon.

La porte logique ET 60 est connectée en sortie du deuxième comparateur 56 et du troisième comparateur 58, et alors apte à recevoir en entrée la tension V_{c2} et la tension V_{c3}.

La porte logique ET 60 est apte à délivrer en sortie une tension Vₐ, la tension Vₐ étant typiquement aussi en forme d'une tension en créneau avec un niveau logique haut si les tensions V_{c2} et V_{c3} présentent un niveau logique haut, et avec un niveau logique bas sinon.

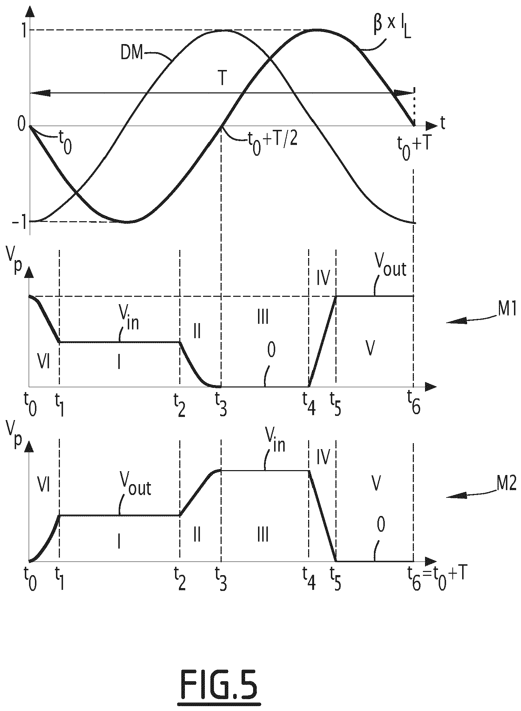

Le fonctionnement nominal d'un cycle du convertisseur 10 va maintenant être décrit en regard de la figure 5 montrant les phases successives d'un cycle de résonance du résonateur piézoélectrique, selon un format générique correspondant à différents modes de fonctionnement du convertisseur 10, à savoir un premier mode de fonctionnement M1, également appelé mode élévateur de tension ; et un deuxième mode de fonctionnement M2, également appelé mode abaisseur de tension.

Ces différentes phases correspondent à un fonctionnement en régime établi ou permanent du convertisseur 10, c'est-à-dire à partir du moment où la résonance du matériel piézoélectrique est atteinte avec une amplitude sensiblement constante, et alors avec des échanges d'énergie et de charge sensiblement équilibrés sur chaque période T du cycle de résonance. Pour simplifier la description, les pertes dans les interrupteurs à l'état passant, ainsi que les pertes dans le matériau piézoélectrique à la résonance sont négligées.

La figure 5 représente alors l'évolution du courant β*I_{L} du courant I_{L} normalisé en amplitude circulant dans le résonateur piézoélectrique 15 ; de la tension Vₚ aux bornes du résonateur piézoélectrique 15 ; et de la déformation mécanique du résonateur piézoélectrique 15, représentée par la courbe DM ; ceci au cours d'un cycle de résonance et pour deux modes de fonctionnement du convertisseur 10, à savoir le premier mode de fonctionnement M1 en élévateur de tension, et le deuxième mode de fonctionnement M2 en abaisseur de tension. Avec β=-1 en mode de fonctionnement élévateur de tension M1 ; et β=+1 en mode de fonctionnement abaisseur de tension M2.

Par convention, un premier instant temporel de commutation, noté t₁, correspond à la fermeture du premier interrupteur K₁ pour le premier mode M1, respectivement du troisième interrupteur K₃ pour le deuxième mode M2, et la tension Vₚ aux bornes du résonateur piézoélectrique 15 est alors sensiblement constante et égale à la tension d'entrée Vᵢₙ selon le premier mode M1, ou à la tension de sortie Vₒᵤₜ selon le deuxième mode M2. En ce premier instant temporel de commutation t₁ commence alors une première phase I durant jusqu'à l'ouverture de l'interrupteur qui a été fermé en le premier instant temporel de commutation t₁.

Un deuxième instant temporel de commutation, noté t₂, correspond à l'ouverture du premier interrupteur K₁ pour le premier mode M1, respectivement du troisième interrupteur K₃ pour le deuxième mode M2, et la tension Vₚ aux bornes du résonateur piézoélectrique 15 passe alors d'une tension précédente Vᵢₙ selon le premier mode M1, ou Vₒᵤₜ selon le deuxième mode M2, à une position de circuit ouvert. En ce deuxième instant temporel de commutation t₂ commence alors une deuxième phase II durant jusqu'à un instant temporel t₃ correspondant à un passage à zéro du courant I_{L} circulant dans le résonateur piézoélectrique 15. Préalablement, l'instant temporel t₂ a été défini de sorte qu'en l'instant temporel t₃, la tension Vₚ aux bornes du résonateur piézoélectrique 15 atteigne une valeur correspondant à la valeur permettant une commutation à zéro de tension de l'interrupteur correspondant.

A l'instant temporel t₃, commence une troisième phase III, à tension sensiblement constante à la valeur nulle selon le premier mode M1 via la fermeture du deuxième interrupteur K2, ou la tension d'entrée Vᵢₙ selon le deuxième mode M2 via la fermeture du premier interrupteur K₁, et dure jusqu'à un instant temporel t₄ qui forme un paramètre de réglage du convertisseur 10, cet instant temporel t₄ permettant de définir la tension, le courant ou encore la puissance souhaitée en sortie du convertisseur 10.

L'instant temporel t₄ correspond alors à la fin de la troisième phase III et à l'instant auquel le deuxième interrupteur K₂ selon le premier mode M1, ou respectivement le premier interrupteur K₁ selon le deuxième mode M2, doit alors être ouvert, l'instant temporel t₄ formant un quatrième instant temporel de commutation correspondant à l'ouverture du deuxième interrupteur K₂ selon le premier mode M1, ou respectivement du premier interrupteur K₁ selon le deuxième mode M2.

Au quatrième instant temporel de commutation débute une quatrième phase IV correspondant à une phase à charge sensiblement constante, ou encore en circuit sensiblement ouvert, cette quatrième phase IV durant jusqu'à un instant temporel t₅ défini par le passage à une nouvelle valeur prédéfinie de la tension Vₚ aux bornes du résonateur piézoélectrique 15. Lorsque le convertisseur 10 comporte trois interrupteurs K₁, K₂, K₃ aptes à être commandés pour alterner des phases à tension sensiblement constante et des phases à charge sensiblement constante aux bornes du résonateur piézoélectrique 15, l'instant temporel t₅ formant la fin de la quatrième phase IV correspond typiquement à la fermeture du troisième interrupteur K₃ selon le premier mode M1, ou respectivement du deuxième interrupteur K₂ selon le deuxième mode M2, l'instant temporel t₅ formant alors un cinquième instant temporel de commutation.

A l'instant temporel t₅ débute alors une cinquième phase V correspondant à une phase à tension sensiblement constante à la tension de sortie Vₒᵤₜ selon le premier mode M1 via la fermeture du troisième interrupteur K3, ou à la valeur nulle selon le deuxième mode M2 via la fermeture du deuxième interrupteur K2. Cette cinquième phase V dure jusqu'à un instant temporel t₀, ou encore jusqu'à un instant temporel t₆ modulo la période T du cycle de résonance défini par le passage à zéro du courant I_{L} circulant dans le résonateur piézoélectrique 15, et selon une monotonie opposée à celle du passage à zéro en l'instant temporel t₃. Par convention, l'instant temporel t₆ est égal à la somme de l'instant temporel t₀ et de la période T du cycle de résonance, et est également noté (t₀+T).

Dans l'exemple de la figure 5, l'instant temporel t₆ correspond à la fin d'un cycle de résonance du résonateur piézoélectrique 15, le cycle représenté ayant été défini par rapport aux instants temporels de passage à zéro du courant I_{L} circulant dans le résonateur piézoélectrique 15, et non par rapport au premier instant temporel de commutation t₁.

L'instant temporel t₀, ou encore l'instant temporel t₆, est obtenu via l'ouverture du troisième interrupteur K₃ selon le premier mode M1, ou respectivement du deuxième interrupteur K2 selon le deuxième mode M2, et forme alors un sixième instant temporel de commutation.

A partir du passage par zéro du courant I_{L} circulant dans le résonateur piézoélectrique 15 débute alors une sixième phase VI correspondant à une phase à charge sensiblement constante, cette sixième phase VI phase s'écoulant entre l'instant temporel t₆ et l'instant temporel t₆+t₁, ou encore entre l'instant temporel t₀ et l'instant temporel t₁ dans l'exemple de la figure 5, étant entendu que l'instant temporel t₆ correspond à l'instant temporel t₀ à un cycle de résonance près. La fin de cette sixième phase VI correspond au moment où la tension Vₚ aux bornes du résonateur piézoélectrique 15 atteint la tension d'entrée Vᵢₙ selon le premier mode M1, ou à la tension de sortie Vₒᵤₜ selon le deuxième mode M2.

L'homme du métier observera en outre que la phase au cours de laquelle l'énergie électrique est transférée au résonateur piézoélectrique 15, également appelée phase énergisante du cycle, est la phase correspondant à la fermeture du premier interrupteur K1, c'est-à-dire la première phase I selon le premier mode de fonctionnement M1, et respectivement la troisième phase III selon le deuxième mode de fonctionnement M2. Cette phase énergisante se termine par l'ouverture du premier interrupteur K1 en l'instant temporel t₂ selon le premier mode M1, et respectivement en l'instant temporel t₄ selon le deuxième mode M2. Cet instant temporel d'ouverture du premier interrupteur K1, et plus généralement la durée de la phase énergisante, est défini comme l'instant temporel permettant au résonateur piézoélectrique 15 de recevoir une quantité d'énergie égale à la quantité d'énergie prélevée par la charge 22 de sortie durant la période T.

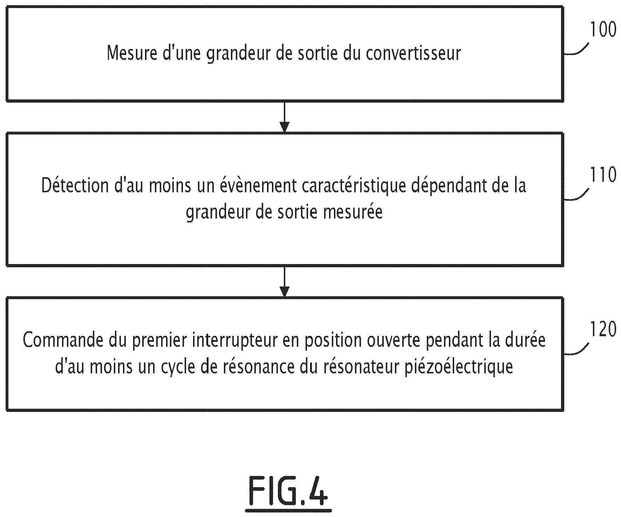

Le procédé de pilotage du convertisseur électrique 10 lors de la détection de l'au moins un événement caractéristique selon l'invention va maintenant être décrit en regard de l'organigramme de la figure 4, le procédé comprenant trois étapes distinctes.

Lors d'une première étape 100, le module de mesure 28 du dispositif de pilotage 20 mesure la grandeur de sortie Gₒᵤₜ, telle que la tension de sortie Vₒᵤₜ, du convertisseur 10 aux bornes de la charge 22.

Lors de la deuxième étape 110, le module de détection 30 détecte ensuite au moins un événement caractéristique dépendant de la grandeur de sortie Gₒᵤₜ mesurée.

L'au moins un événement caractéristique peut être l'évènement de sur-énergie et/ou l'évènement d'énergie minimale.

La détection de l'évènement de sur-énergie va maintenant être décrite.

Le module de détection 30 reçoit la grandeur de sortie Gₒᵤₜ mesurée par le module de mesure 28. L'événement de sur-énergie est détecté au sein de la première unité 34. A titre d'exemple, lorsque la grandeur de sortie Gₒᵤₜ est la tension de sortie Vₒᵤₜ, en sortie du premier diviseur de tension 48 et du deuxième diviseur de tension 50, les tensions V_{d1} et V_{d2} sont comparées au sein du premier comparateur 54. Si la tension V_{d2} issue du deuxième pont diviseur 50 recevant la tension de sortie Vₒᵤₜ est supérieure à la tension V_{d1}, représentative de la tension seuil Vₜₕᵣ, l'évènement de sur-énergie est détecté par le premier comparateur 54, et la tension V_{c1} en sortie du premier comparateur 54 présente alors un niveau logique haut.

L'événement de sur-énergie est donc détecté si la grandeur de sortie Gₒᵤₜ est supérieure à la grandeur seuil Gₜₕᵣ.

La détection de l'évènement d'énergie minimale va maintenant être décrite.

Le module de détection 30 reçoit la grandeur de sortie Gₒᵤₜ mesurée par le module de mesure 28. L'événement d'énergie minimale est détecté au sein de la deuxième unité 36. A titre d'exemple, lorsque la grandeur de sortie Gₒᵤₜ est la tension de sortie Vₒᵤₜ, en sortie du deuxième diviseur de tension 50 et du troisième diviseur de tension 52, les tensions V_{d2} et V_{d3} sont comparées au sein du deuxième comparateur 56. Si la tension V_{d2} issue du deuxième pont diviseur 50 recevant la tension de sortie Vₒᵤₜ est supérieure à la tension V_{d3}, représentative de la tension cible Vₜₐᵣ, alors la tension V_{c2} en sortie du deuxième comparateur 56 présente un niveau logique haut. En outre, les tensions V_{CI} et Vₜ₁ sont également comparées au sein du troisième comparateur 58. Si la tension Vₜ₁ liée à la durée D_{K1} de fermeture de l'interrupteur K1 devient inférieure ou égale à la tension V_{CI} liée à la durée minimale Dₘᵢₙ, alors la tension V_{c3} en sortie du troisième comparateur 58 présente aussi un niveau logique haut. Dans ce cas, la porte logique AND 60 présente donc aussi un niveau logique haut à sa sortie, ce qui correspond à la détection de l'événement d'énergie minimale.

L'événement d'énergie minimale est alors détecté si la grandeur de sortie Gₒᵤₜ est supérieure à la grandeur cible Gₜₐᵣ et si la durée D_{K1} de fermeture de l'interrupteur K1 est inférieure ou égale à la durée minimale Dₘᵢₙ.

La présence d'un niveau haut sur l'une des tensions V_{c1} ou Vₐ engendre la présence d'un niveau haut sur la tension V_{b} ce qui correspond à la détection de l'au moins un événement caractéristique. Cette détection, sous la forme de la tension V_{b} au niveau haut, est alors transmise au module de commande 32, et en particulier au multiplexeur 44.

Lors de l'étape 120, et lorsque la tension V_{b} est au niveau haut, correspondant à la détection de l'au moins un événement caractéristique, le multiplexeur 44 sélectionne alors le signal de commande en ouverture K1-off. Pendant la durée d'au moins un cycle de résonance du résonateur piézoélectrique 15, le premier interrupteur K1 va alors être forcé en position ouverte, c'est-à-dire maintenu en position ouverte. Le convertisseur électrique 10 n'est donc plus dans son mode de fonctionnement nominal, et passe dans un mode de fonctionnement particulier au cours duquel le nombre de phases est diminué d'une unité, notamment avec une phase à tension sensiblement constante en moins, et est typiquement égal à 5 pour le convertisseur électrique 10 de l'exemple de la figure 1.

Dans ce mode de fonctionnement particulier, la phase supprimée est la phase énergisante du résonateur électrique 15, typiquement la première phase I selon le premier mode de fonctionnement M1, et respectivement la troisième phase III selon le deuxième mode de fonctionnement M2.

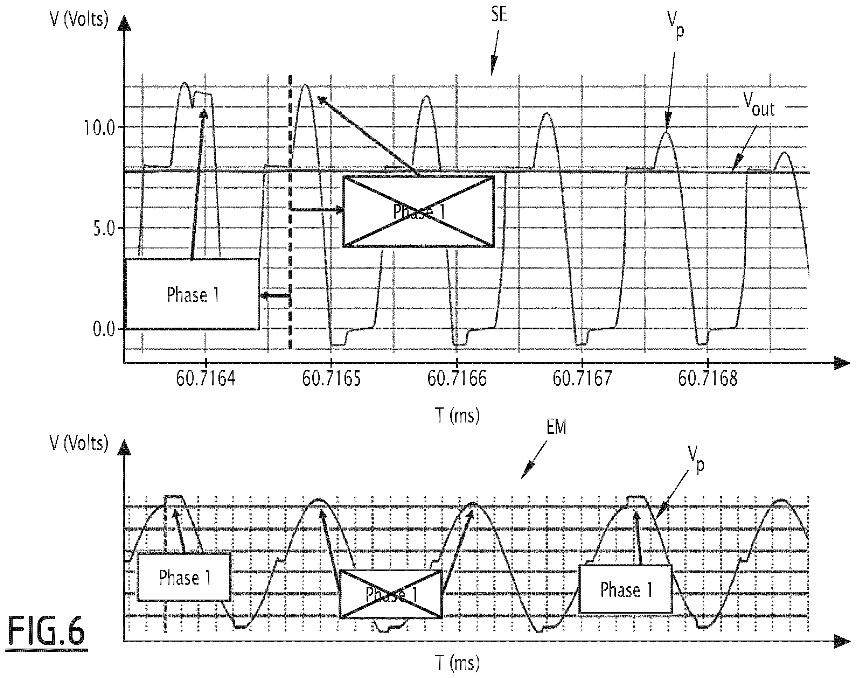

Autrement dit, lorsqu'au moins un événement caractéristique est détecté par le module de détection 30, le module de commande 32 supprime la phase énergisante en commandant l'ouverture du premier interrupteur K1 tant que le module de détection 30 détecte la présence de l'au moins un événement caractéristique, la suppression de la phase énergisante pouvant donc être consécutive sur plusieurs cycles, comme cela est représenté à la figure 6.

La figure 6 représente la courbe de la tension Vₚ aux bornes du résonateur piézoélectrique 15, d'une part pour un premier exemple noté SE de détection de l'événement de sur-énergie, et d'autre part pour un deuxième exemple EM de détection de l'évènement d'énergie minimale.

L'homme du métier observera alors que dans le premier exemple de sur-énergie SE, à partir du moment où l'événement de sur-énergie est détecté par le module de détection 30, correspondant à la droite verticale en trait pointillé, la phase énergisante, telle que la première phase I, aussi notée phase 1, est supprimée au cours de plusieurs cycles successifs de résonance du résonateur piézoélectrique 15, et au cours d'au moins cinq cycles successifs dans ce premier exemple SE, ceci jusqu'à ce que la grandeur de sortie Gₒᵤₜ devienne à nouveau inférieure à la grandeur seuil Gₜₕᵣ.

Dans le deuxième exemple d'énergie minimale EM, la phase énergisante, telle que la première phase I, aussi notée phase 1, est aussi supprimée au cours de plusieurs cycles successifs de résonance du résonateur piézoélectrique 15, en l'occurrence au cours de deux cycles successifs, et le convertisseur 10 repasse ensuite en mode nominal de fonctionnement. L'homme du métier comprendra que dans ce deuxième exemple, le convertisseur repasse en mode nominal de fonctionnement dès que l'événement d'énergie minimale n'est plus détecté, c'est-à-dire dès que la grandeur de sortie Gₒᵤₜ devient à nouveau inférieure à la grandeur cible Gₜₐᵣ.

On conçoit ainsi que le dispositif électronique de pilotage 20 et le procédé de pilotage selon l'invention permettent un pilotage amélioré du convertisseur d'énergie électrique 10.

L'homme du métier comprendra en outre que, selon l'invention, en cas de détection de l'au moins un événement caractéristique, le module de commande 32 est configuré pour commander le premier interrupteur K1 en position ouverte pendant la durée d'au moins un cycle de résonance du résonateur piézoélectrique 15, tout en ne modifiant pas pendant ladite durée la commande des autres interrupteurs K2, K3 connectés au résonateur piézoélectrique 15.

Autrement dit, lors de ladite durée, seule la commande du premier interrupteur K1 est modifiée pour maintenir ce premier interrupteur K1 en position ouverte, pendant que la commande des autres interrupteurs K2, K3 est inchangée, au moins par rapport au cycle de résonance précédent du résonateur piézoélectrique.

L'invention correspond alors à la superposition d'un état d'exception, à savoir la commande du premier interrupteur K1 en position ouverte pendant ladite durée en cas de détection de l'au moins un événement caractéristique, à un état de fonctionnement régulé normal.

Au contraire, dans l'état de la technique, si la loi de commande est modifiée temporairement pour le premier interrupteur, elle l'est aussi pour les autres interrupteurs, ce qui revient à changer de cycle ou de séquence, sans poursuivre le cycle normal correspondant à l'état de fonctionnement régulé normal.

## Revendications

1. Dispositif électronique (20) de pilotage d'un convertisseur d'énergie électrique (10) apte à convertir une tension d'entrée (Vᵢₙ) en une tension de sortie (Vₒᵤₜ), le convertisseur (10) comportant deux bornes d'entrée pour recevoir la tension d'entrée (Vᵢₙ), deux bornes de sortie pour délivrer la tension de sortie (Vₒᵤₜ), un résonateur piézoélectrique (15) ayant deux bornes (26, 27), et plusieurs interrupteurs (K1, K2, K3) connectés au résonateur piézoélectrique (15) ; l'un des interrupteurs, dit premier interrupteur (K1), étant connecté entre l'une des bornes d'entrée et le résonateur piézoélectrique (15), le premier interrupteur (K1) étant commutable entre une position ouverte et une position fermée dans laquelle la tension d'entrée (Vᵢₙ) est appliquée aux bornes du résonateur piézoélectrique (15) ;
le dispositif électronique de pilotage (20) comprenant :
- un module de mesure (28) configuré pour mesurer une grandeur de sortie (Gₒᵤₜ) du convertisseur (10) ;
- un module de commande (32) configuré pour commander une commutation de chacun des interrupteurs (K1, K2, K3), pour alterner des phases à tension sensiblement constante aux bornes du résonateur piézoélectrique (15) et des phases à charge sensiblement constante aux bornes dudit résonateur piézoélectrique (15) ;
**caractérisé en ce qu'**il comprend en outre :
- un module de détection (30) configuré pour détecter au moins un événement caractéristique dépendant de la grandeur de sortie (Gₒᵤₜ) mesurée ;
le module de commande (32) étant configuré pour, en cas de détection de l'au moins un événement caractéristique, commander le premier interrupteur (K1) en position ouverte pendant la durée d'au moins un cycle de résonance du résonateur piézoélectrique (15).

2. Dispositif (20) selon la revendication 1, dans lequel l'au moins un événement caractéristique comporte un événement de sur-énergie, détecté lorsque la grandeur de sortie (Gₒᵤₜ) mesurée est supérieure à une grandeur seuil (Gₜₕᵣ).

3. Dispositif (20) selon la revendication 1 ou 2, dans lequel l'au moins un événement caractéristique comporte un événement d'énergie minimale, détecté lorsque la grandeur de sortie (Gₒᵤₜ) mesurée est supérieure à une grandeur cible (Gₜₐᵣ) et que la durée (D_{K1}) pendant laquelle le premier interrupteur (K1) est en position fermée au cours d'un cycle respectif de résonance est inférieure ou égale à une durée minimale (Dₘᵢₙ).

4. Dispositif (20) selon les revendications 2 et 3, dans lequel la grandeur seuil (Gₜₕᵣ) est supérieure à la grandeur cible (Gₜₐᵣ).
la grandeur seuil (Gₜₕᵣ) étant de préférence égale à un multiple de la grandeur cible (Gₜₐᵣ), le multiple étant compris entre 1,02 et 1,3 ;
le multiple étant de préférence encore compris entre 1,02 et 1,1 ; de préférence encore égal à 1,05.

5. Dispositif (20) selon l'une quelconque des revendications précédentes, dans lequel la grandeur de sortie (Gₒᵤₜ) est la tension de sortie (Vₒᵤₜ).

6. Dispositif (20) selon l'une quelconque des revendications précédentes, dans lequel le module de commande (32) est configuré pour commander le premier interrupteur (K1) en position ouverte pendant la durée de plusieurs cycles successifs de résonance du résonateur piézoélectrique (15).

7. Dispositif (20) selon l'une quelconque des revendications précédentes, dans lequel le module de commande (32) est configuré pour commander le premier interrupteur (K1) en position ouverte tant que l'au moins un événement caractéristique est détecté.

8. Dispositif (20) selon l'une quelconque des revendications précédentes, dans lequel le résonateur piézoélectrique (15) comporte l'une des constitutions parmi le groupe consistant en : un unique élément piézoélectrique ; plusieurs éléments piézoélectriques connectés en série ; plusieurs éléments piézoélectriques connectés en parallèle ; un élément piézoélectrique et un condensateur auxiliaire connectés en série ; un élément piézoélectrique et un condensateur auxiliaire connectés en parallèle ; et un agencement de plusieurs branches parallèles, chaque branche comportant un ou plusieurs éléments piézoélectriques connectés en série ou un condensateur auxiliaire ;
le condensateur auxiliaire étant de préférence de capacité supérieure, de préférence encore au moins trois fois supérieure, à une capacité de référence du ou des éléments piézoélectriques, chaque élément piézoélectrique étant modélisé sous forme d'un condensateur et d'une branche résonante connectée en parallèle du condensateur, la capacité de référence étant la capacité dudit condensateur.

9. Système de conversion d'énergie électrique (5) comprenant :
- un convertisseur d'énergie électrique (10) comportant deux bornes d'entrée pour recevoir la tension d'entrée (Vᵢₙ), deux bornes de sortie pour délivrer la tension de sortie (Vₒᵤₜ), un résonateur piézoélectrique (15) ayant deux bornes (26, 27), et plusieurs interrupteurs (K1, K2, K3) connectés au résonateur piézoélectrique (15), l'un des interrupteurs, dit premier interrupteur (K1), étant connecté entre l'une des bornes d'entrée et le résonateur piézoélectrique (15), le premier interrupteur (K1) étant commutable entre une position ouverte et une position fermée dans laquelle la tension d'entrée (Vᵢₙ) est appliquée aux bornes du résonateur piézoélectrique (15) ; et
- un dispositif électronique (20) de pilotage du convertisseur d'énergie électrique (10) ;
**caractérisé en ce que** le dispositif de pilotage (20) est selon l'une quelconque des revendications précédentes.

10. Procédé de pilotage d'un convertisseur d'énergie électrique (10) apte à convertir une tension d'entrée (Vᵢₙ) en une tension de sortie (Vₒᵤₜ), le convertisseur (10) comportant deux bornes d'entrée pour recevoir la tension d'entrée (Vᵢₙ), deux bornes de sortie pour délivrer la tension de sortie (Vₒᵤₜ), un résonateur piézoélectrique (15) ayant deux bornes (26, 27), et plusieurs interrupteurs (K1, K2, K3) connectés au résonateur piézoélectrique (15) ; l'un des interrupteurs, dit premier interrupteur (K1), étant connecté entre l'une des bornes d'entrée et le résonateur piézoélectrique (15), le premier interrupteur (K1) étant commutable entre une position ouverte et une position fermée dans laquelle la tension d'entrée (Vᵢₙ) est appliquée aux bornes du résonateur piézoélectrique (15) ;
le procédé étant mis en oeuvre par un dispositif électronique de pilotage (20) et comprenant les étapes suivantes :
- mesure (100) d'une grandeur de sortie (Gₒᵤₜ) du convertisseur (10) ;
- commande (120) d'une commutation de chacun des interrupteurs (K1, K2, K3), pour alterner des phases à tension sensiblement constante aux bornes du résonateur piézoélectrique (15) et des phases à charge sensiblement constante aux bornes dudit résonateur piézoélectrique (15) ;
**caractérisé en ce qu'**il comprend en outre l'étape suivante :
- détection (110) d'au moins un événement caractéristique dépendant de la grandeur de sortie (Gₒᵤₜ) mesurée ;
l'étape de commande (120) comportant, en cas de détection de l'au moins un événement caractéristique, une commande du premier interrupteur (K1) en position ouverte pendant la durée d'au moins un cycle de résonance du résonateur piézoélectrique (15).
